# EUROPEAN PATENT APPLICATION

(11) **EP 4 653 233 A1**
(43) Date of publication of application: **26.11.2025**
(21) Application number: 24195174.8
(22) Date of filing: 19.08.2024
(51) Int. Cl.: B60L 3/00, B60L 15/20, A61G 5/04, B60W 30/09, B62K 5/007, B62J 45/41

(54) **COLLISION AVOIDANCE SYSTEM FOR MOBILITY SCOOTER**

(30) Priority: 20.08.2023 US 202363533697 P
(71) Applicant: Harper, Michael Don, Fort Worth, TX 76132 (US); Coats, Scott David, Aledo, TX 76008 (US)
(72) Inventor: Harper, Michael Don, Fort Worth, TX 76132 (US); Coats, Scott David, Aledo, TX 76008 (US)
(74) Representative: Durm Patentanwälte PartG mbB

(57) **Abstract**

A mobility vehicle including a drive member (28) and an obstruction detection and avoidance system. The object detection and avoidance system includes a thermal sensor configured to sense an obstruction and controller communicatively coupled to a thermal sensor. The controller includes a memory communicably coupled to one or more processors, the memory storing instructions that, when executed by the one or more processors, causes the processing circuit to detect an obstruction, determine a distance range from the obstruction and generate a control signal when the distance range is less than a predetermined value to adjust the output of the drive member.

## Description

### CROSS-REFERENCE TO RELATED APPLICATION

This application claims priority to United States provisional application No. 63/533,697, filed August 20, 2023, the contents of which are hereby incorporated by reference in its entirety.

### TECHNICAL FIELD

The present application relates generally a system for operating a mobility scooter, and in particular, an obstruction detection and avoidance system for a motorized mobility scooter.

### BACKGROUND

Mobility scooters are often used by seniors and other individuals needing assistance with mobility in places such as retirement homes, nursing homes, assisted living homes, shopping stores, and the like. Users of these devices may often suffer from diminishing dexterity and/or neurological physiological functionality. As such, an effective collision avoidance system may be needed to assist a user in safely operating the scooter. Some conventional collision avoidance systems may comprise proximity switches for detection of objects or movement. However, the presence of multiple objects in proximity to the scooter may interfere with its proper performance. For example, in close quarters such as dining rooms, objects such as chair legs may cause too many interruptions that may easily frustrate the user of the scooter. As such, an improved safety system for motorized mobility scooters is needed.

### SUMMARY

According to a first aspect, there is provided a mobility scooter including a drive system and an obstruction detection and avoidance system coupled thereto. The obstruction detection and avoidance system includes a thermal sensor configured to sense and otherwise detect an obstruction to the mobility scooter. The obstruction detection and avoidance system further includes a controller communicatively coupled to the thermal sensor. In operation, the controller, in response to the detection of an obstruction by the thermal sensor, determines a distance range from the obstruction and generates a control signal when the distance range is less than a predetermined value to adjust the output of the drive member. The controller, in outputting the control signal, is further configured to reduce the velocity of the mobility scooter to a non-zero value in response to determining that an obstacle is detected within a first distance range. The controller is also configured to reduce the velocity of the mobility scooter to zero in response to determining that an obstacle is detected within a second distance range. According to certain embodiments, the second distance range is smaller in magnitude than the first distance range.

According to a second aspect, there is provided a detection system for use on a mobility scooter. The detection system includes a thermal sensor configured to sense an obstruction by capturing a thermal image. The detection system further includes a processor configured to analyze a thermal signature contained in the thermal image to determine the presence of an obstruction, determine whether the obstruction constitutes an obstruction to be avoided by the mobility scooter and generate a signal indicative of the presence of the obstruction. In response, the processor is configured to reduce the velocity of the mobility scooter to zero in response to determining that an obstacle is detected within a second distance range. According to certain embodiments, the second distance range is smaller in magnitude than the first distance range.

### BRIEF DESCRIPTION OF THE DRAWINGS

FIG. 1 is an exemplary perspective view of a mobility scooter in which an obstruction detection and avoidance system is employed to advantage.
FIG. 2 is a side view of the mobility scooter of FIG. 1.
FIG. 3 is a block diagram of the obstruction detection and avoidance system.

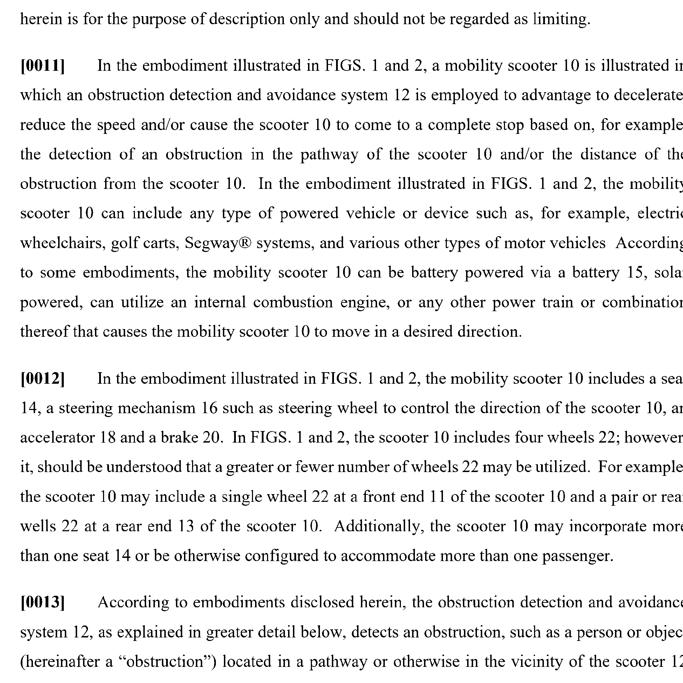

FIG. 4 is a flowchart of an illustrative method for decelerating the mobility scooter of FIGS. 1-3.

### DETAILED DESCRIPTION

Before turning to the figures, which illustrate certain embodiments in detail, it should be understood that the present disclosure is not limited to the details or methodology set forth in the description or illustrated in the figures. It should also be understood that the terminology used herein is for the purpose of description only and should not be regarded as limiting.

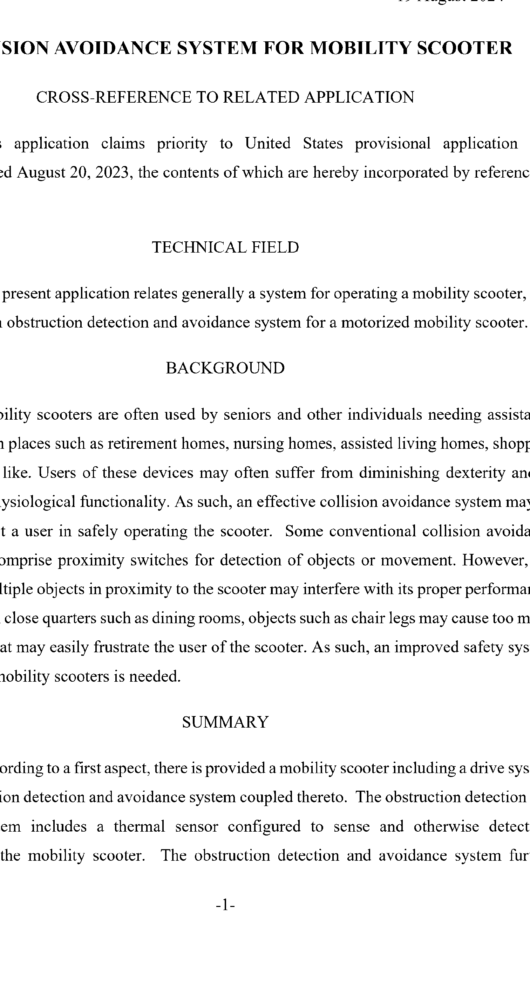

In the embodiment illustrated in FIGS. 1 and 2, a mobility scooter 10 is illustrated in which an obstruction detection and avoidance system 12 is employed to advantage to decelerate, reduce the speed and/or cause the scooter 10 to come to a complete stop based on, for example, the detection of an obstruction in the pathway of the scooter 10 and/or the distance of the obstruction from the scooter 10. In the embodiment illustrated in FIGS. 1 and 2, the mobility scooter 10 can include any type of powered vehicle or device such as, for example, electric wheelchairs, golf carts, Segway^{®} systems, and various other types of motor vehicles According to some embodiments, the mobility scooter 10 can be battery powered via a battery 15, solar powered, can utilize an internal combustion engine, or any other power train or combination thereof that causes the mobility scooter 10 to move in a desired direction.

In the embodiment illustrated in FIGS. 1 and 2, the mobility scooter 10 includes a seat 14, a steering mechanism 16 such as steering wheel to control the direction of the scooter 10, an accelerator 18 and a brake 20. In FIGS. 1 and 2, the scooter 10 includes four wheels 22; however, it, should be understood that a greater or fewer number of wheels 22 may be utilized. For example, the scooter 10 may include a single wheel 22 at a front end 11 of the scooter 10 and a pair or rear wells 22 at a rear end 13 of the scooter 10. Additionally, the scooter 10 may incorporate more than one seat 14 or be otherwise configured to accommodate more than one passenger.

According to embodiments disclosed herein, the obstruction detection and avoidance system 12, as explained in greater detail below, detects an obstruction, such as a person or object (hereinafter a "obstruction") located in a pathway or otherwise in the vicinity of the scooter 12 and, in response to detecting the obstruction, determines, based on a distance from the scooter 12 and/or other factors, whether to issue an override command to decelerate/slow and/or stop movement of the scooter 12 in order to prevent contact with the obstruction. In the embodiment illustrated in FIGS. 1 and 2, the obstruction detection and avoidance system 12 includes a plurality of sensors 24. For example, the detection system 10 includes at least one sensor 24 located on the front end 11 of the scooter 10, at least one rear sensor 22 located on or near the rear end 13 of the scooter 12. Furthermore, additional sensors 24 can be located on the corners, the sides, or at any other positions on the scooter 10. During operation, as the scooter 12 is driven in either a forward or reverse direction, a front sensor 24 or a rear sensor 24, respectively, detects an object or obstruction in the pathway of the scooter 10. Similarly, sensors 24 located on the corners or sides of the scooter are operable to detect an obstruction in the forward direction or the direction in which the vehicle is turning or about to turn. In the embodiment illustrated in FIGS 1 and 2, the sensors 24 can be movable (e.g., rotatable) in response to, for example, movement of the steering mechanism such that, instead of being stationary, the sensors 24 can rotate in response to turning of the steering mechanism 16 or movement of the wheels 22.

According to some embodiments, the sensors 24 can be a thermal imaging array sensor that is communicatively coupled to a controller 26 (FIG. 2) for controlling movement (i.e., decelerating and/or stopping movement) of the scooter 10 via drive member 28, such as, for example, a direct current (DC) motor.

As explained in greater detail below, in operation, while the scooter 10 is in motion, the detection system 12, and in particular, sensor(s) 24, are operable to detect an obstruction in the pathway of the scooter 10. In the event the obstruction is detected, the controller 26 is configured to determine whether the obstruction is less than a first predetermined distance. If it is less than the first predetermined distance, the system 12 will cause the scooter 10 to decelerate/slow and/or maintain a safe speed. In the event the obstruction is located from the scooter 10 a predetermined distance that is less than the first predetermined distance, the object detection system 12 will cause the scooter 10 to stop prior to contacting and potentially damaging the obstruction.

According to certain embodiments, the obstruction detection and avoidance system 12 is configured to decelerate and/or maintain the scooter at a safe speed by capturing thermal imaging of the obstruction and decelerating upon detection of the proximity of the scooter 10 to the obstruction (i.e., an individual and/or object). In one embodiment, the detection system 12 may be configured to stop the scooter 10 upon detection of individuals and/or objects within about 14 inches to about 24 inches of the scooter 10, however, it should be understood that the predetermined distances may vary. In operation, the sensor(s) 24 send(s) registers to the controller 26, wherein the amount of voltage released by the controller may be a function of distance(s) between the scooter 12 and one or more objects/persons in the vicinity. In one embodiment, the controller 26 may be programmed with set parameters stored in memory for determining an amount of voltage to be released by the motor 28.

According to some embodiments, the sensor(s) 24 may be located at a height of between about 6 inches to about 30 inches from ground level, although such location can vary outside of this range. This enables the sensor(s) 24 to capture the legs and torso areas of a person as well as pets. Additionally, these images are captured with greater accuracy as cooler air settles closer to the floor causing thermal image registers to be more pronounced due to the cooler background. In some embodiments, each thermal image array sensor(s) may be an 8x8 or 64 pixel component, or greater, but is not limited to this option. Additionally, the sensor(s) 24 may be configured to detect images of up to 21 feet away or greater, depending on the type of sensor used. According to an exemplary embodiment, the disclosed system may use thermal image array sensors of at least 64 pixels, which are wired to a microprocessor within an enclosure, and within at least 14 inches to reduce possible electrical interferences. Cabling can be used to run to the motor controller in an enclosure which is in very close proximity to the batteries and motor. A voltage regulator may further be used to reduce 12/24volts systems to low voltage for power to the microprocessor.

In operation, signals from the infrared thermal image array sensor(s) 24 may be sent to the controller 26, which then controls the amount of current to the DC electric motor(s) 28, wherein, for example, the current may be supplied by the batteries on the scooter 10. In certain embodiments, the system may be configured to allow current to resume at a low rate (e.g., for driving the scooter 10 at a speed less than the average walking speed of about 0.57 to about 1.1 miles per hour) after a short time period; or, if the distance is determined greater than 4 feet, the system may be configured to allow the scooter 12 to resume to a speed of about 2 to about 2.3 miles per hour as a normal operating speed. It shall be appreciated that operational parameters may vary based on factors such as user needs/ preferences, design preferences, type of scooter, etc.

It shall be appreciated that the disclosed device and system can have multiple configurations in different embodiments. For example, the microprocessor or controller 26 that receives the thermal imaging registers could be moved farther away and back in the battery area; this may however result in less accuracy due to the greater length of cabling and number of electrical interferences. In some embodiments, an RS458 interface for the rear sensor(s) may be used for reducing electrical interferences which are greater after 50 centimeters of wire cabling. It shall be appreciated that the device and system described herein may comprise any alternative known materials in the field and be of any color, size, and/or dimensions.

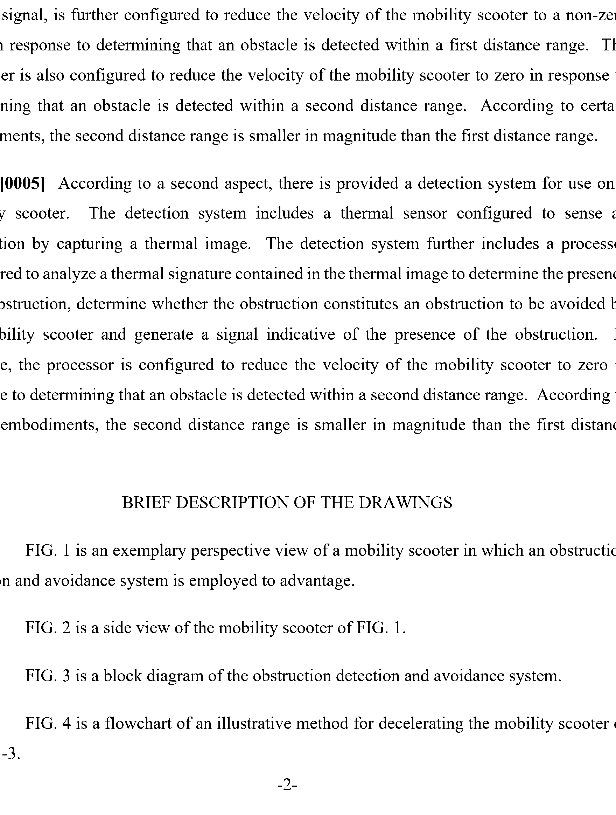

According to some embodiments and as explained above, the obstruction detection and avoidance system 12 may be configured for detecting objects surrounding the scooter 10; however, it may, in addition to exercising control over the scooter 10 such as, for example, selectively decelerating and/or stopping the scooter 10, be configured to issue alerts via an alert module 30 (FIG. 3). For example, the obstruction detection system 12 may issue an alert when an obstruction is detected. Moreover, depending on the location of the obstruction, the object detection system 12 may issue alerts or actively manage controls/operation of the scooter 10. For example, the object detection system 12 may cause a siren, noise, or other auditory alert to issue in response to approaching within 1 foot, two feet, or any other predetermined distance and/or may cause the scooter 10 to automatically decelerate/brake and/or stop moving in response to approaching within six inches or any other predetermined distance. In other embodiments, even if an object is detected, the obstruction detection system 12, and in particular, alert module 30, may issue no alert (e.g., if the object is outside a pre-defined range from the path of travel of the scooter 10) or may issue an alert without a change in speed.

According to an exemplary embodiment, the disclosed system 12 may use thermal image array sensors of at least 64 pixels which are wired to the controller within an enclosure, and within at least 14 inches to reduce possible electrical interferences. Cabling can be used to run to the motor controller in an enclosure which is in very close proximity to the batteries and motor. A voltage regulator may further be used to reduce 12/24 volts systems to low voltage for power to the microprocessor.

As such, the disclosed system utilizes thermal imaging array sensor(s) rather than proximity sensors for controlling the voltage to the scooter's motor to effectuate speed control and collision avoidance. This prevents users from losing control of the scooter, and inadvertently colliding with other individuals or objects in the vicinity.

Referring to FIG. 3, the object detection system 12 may include a controller 26 communicatively coupled to the one or more sensors 24. In operation, the controller 24 is configured to process the data stream received from the sensors 24 to determine if an obstruction is present and/or, where it is. The controller 26 may also be configured to determine if an alert should be issued or an automated motion control should be exercised (i.e., decelerating and/or stopping) and, accordingly, issue an alert and/or send signal for automated motion control to avoid contact between the scooter 10 and the obstruction. The controller 26 may include a computing device including a processor, a computer-readable storage medium, and one or more inputs and outputs. The computer-readable storage medium may include machine readable instructions for one or more algorithms to operate the one or more sensors 24 receive and process the data captured by the sensors and generate one or more outputs. The inputs may be particularly adapted to receive data from the one or more sensors 24 and the outputs may be particularly adapted to issue alerts via an alert module 30 (e.g., sounds from a speaker, lights configured to flash or illuminate in a display, screens configured to display text, etc.) and/or may be particularly adapted to exercise controls such as maintaining a safe speed, decelerating, and/or or stopping the scooter 10.

In some embodiments, the obstruction detection system 12 may further include an override functionality configured to allow a user to ignore, turn off, temporarily mitigate, or otherwise bypass the alert module and/or control commands of the obstruction detection system 12. For example, an override device 32 such as a button, dial, knob, lever, switch, or the like may cause an object detection override functionality. An override functionality may be defined as a user manually overriding one or more features of the obstruction detection system 12. For example, an operator may wish to maneuver the scooter 10 very close (e.g., less than one foot, less than two feet, etc.) to an object. The detection system 12 may detect the object and cause an alert and/or stop the scooter 10 from moving closer to the minimum separation distance, for example, six inches from the obstacle. Accordingly, in one embodiment, the operator may cause an override of the object detection system 12 by pressing the button 32 associated with the override functionality. A pre-defined time after the button 32 is pressed or during the duration that the button 34 is held down, the object detection system 12 may cease issuing control commands and allow the operator to maneuver the scooter 10 closer to the object (e.g., less than tone foot, less than 6 inches, etc.) without causing the scooter 10 to slow down, stop, or the like. The object detection system 12 may include additional override functionalities (e.g., temporarily powering down the object detection system 12, causing the object detection system 12 to stop sensing on one or more sides, setting the alarm to mute, etc.) and manners of triggering the override functionalities (e.g., typing a code or command to cause an override, removing a component to cause an override, etc.), all of which are contemplated and within the scope of this disclosure.

The controller further includes a 26 processor 34 and at least one memory 36. In some embodiments, the memory 36 may include preset distances and/or speeds configured to store information associated with operation of the object detection system 12.

The controller 26 may be a combination of, but not limited to, a set of instructions stored on a memory, one or more processors configured to execute the set of instructions, a Random Access Memory (RAM), a Read Only Memory (ROM), flash memory, a data structure, and the like.

FIG. 3 shows a flow diagram of a representative object detection system 12. The object detection system 12. The process begins at block 40. At block 42, the presence of an obstruction is determined. If no obstruction is identified by the sensor 24, the normal operation of the scooter 10 continues. If at block 42 an obstruction is detected by the sensor 24, the controller 26 determines the location of the obstruction relative to the scooter 10. For example, at decision block 44, if it is less than or equal to a first distance, then the controller generates a signal to stop the motor 28, as indicated in step 46. If at decision block 48 the controller 26 determines the location of the obstruction relative to the scooter 10 to be greater than a first distance but less than a second distance, then the controller 26 sends a signal to a drive system 28, such as a DC motor, to decelerate and/or slow the scooter 10 by varying a voltage thereto as indicated at block 50. Once the obstruction is identified, avoided or no longer a factor, the user can override the object detection system 12 by accelerating the scooter 10.

It will be appreciated that the description of the computing system provided herein is illustrative and that variations and modifications to the configuration or implementation of the computer system are possible. Computer systems used in connection with the present disclosure can have other capabilities not specifically described here. Further, while the computing system is described with reference to particular blocks, it is to be understood that these blocks are defined for convenience of description and are not intended to imply a particular physical arrangement of component parts. For instance, different blocks can be located in the same facility, in the same server rack, on the same motherboard, or on the same circuitry. Further, the blocks need not correspond to physically distinct components. Blocks can be configured to perform various operations, e.g., by programming a processor or providing appropriate control circuitry, and various blocks might or might not be reconfigurable depending on how the initial configuration is obtained. Implementations of the present disclosure can be realized in a variety of apparatus including electronic devices implemented using any combination of circuitry and software.

As utilized herein with respect to numerical ranges, the terms "approximately," "about," "substantially," and similar terms generally mean +/- 10% of the disclosed values, unless specified otherwise. As utilized herein with respect to structural features (e.g., to describe shape, size, orientation, direction, relative position, etc.), the terms "approximately," "about," "substantially," and similar terms are meant to cover minor variations in structure that may result from, for example, the manufacturing or assembly process and are intended to have a broad meaning in harmony with the common and accepted usage by those of ordinary skill in the art to which the subject matter of this disclosure pertains. Accordingly, these terms should be interpreted as indicating that insubstantial or inconsequential modifications or alterations of the subject matter described and claimed are considered to be within the scope of the disclosure as recited in the appended claims.

The term "coupled" and variations thereof, as used herein, means the joining of two members directly or indirectly to one another. Such joining may be stationary (e.g., permanent or fixed) or moveable (e.g., removable or releasable). Such joining may be achieved with the two members coupled directly to each other, with the two members coupled to each other using a separate intervening member and any additional intermediate members coupled with one another, or with the two members coupled to each other using an intervening member that is integrally formed as a single unitary body with one of the two members. If "coupled" or variations thereof are modified by an additional term (e.g., directly coupled), the generic definition of "coupled" provided above is modified by the plain language meaning of the additional term (e.g., "directly coupled" means the joining of two members without any separate intervening member), resulting in a narrower definition than the generic definition of "coupled" provided above. Such coupling may be mechanical, electrical, or fluidic.

References herein to the positions of elements (e.g., "top," "bottom," "above," "below") are merely used to describe the orientation of various elements in the figures. It should be noted that the orientation of various elements may differ according to other embodiments, and that such variations are intended to be encompassed by the present disclosure.

The hardware and data processing components used to implement the various processes, operations, illustrative logics, logical blocks, modules, and circuits described in connection with the embodiments disclosed herein may be implemented or performed with a general purpose single- or multi-chip processor, a digital signal processor (DSP), an application specific integrated circuit (ASIC), a field programmable gate array (FPGA), or other programmable logic device, discrete gate or transistor logic, discrete hardware components, or any combination thereof designed to perform the functions described herein. A general-purpose processor may be a microprocessor, or, any conventional processor, controller, microcontroller, or state machine. A processor also may be implemented as a combination of computing devices, such as a combination of a DSP and a microprocessor, a plurality of microprocessors, one or more microprocessors in conjunction with a DSP core, or any other such configuration. In some embodiments, particular processes and methods may be performed by circuitry that is specific to a given function. The memory (e.g., memory, memory unit, storage device) may include one or more devices (e.g., RAM, ROM, Flash memory, hard disk storage) for storing data and/or computer code for completing or facilitating the various processes, layers and modules described in the present disclosure. The memory may be or include volatile memory or non-volatile memory, and may include database components, object code components, script components, or any other type of information structure for supporting the various activities and information structures described in the present disclosure. According to an exemplary embodiment, the memory is communicably connected to the processor via a processing circuit and includes computer code for executing (e.g., by the processing circuit or the processor) the one or more processes described herein.

The present disclosure contemplates methods, systems, and program products on any machine-readable media for accomplishing various operations. The embodiments of the present disclosure may be implemented using existing computer processors, or by a special purpose computer processor for an appropriate system, incorporated for this or another purpose, or by a hardwired system. Embodiments within the scope of the present disclosure include program products comprising machine-readable media for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. Combinations of the above are also included within the scope of machine-readable media. Machine-executable instructions include, for example, instructions and data which cause a general-purpose computer, special purpose computer, or special purpose processing machines to perform a certain function or group of functions.

Although the figures and description may illustrate a specific order of method steps, the order of such steps may differ from what is depicted and described, unless specified differently above. Also, two or more steps may be performed concurrently or with partial concurrence, unless specified differently above. Such variation may depend, for example, on the software and hardware systems chosen and on designer choice. All such variations are within the scope of the disclosure. Likewise, software implementations of the described methods could be accomplished with standard programming techniques with rule-based logic and other logic to accomplish the various connection steps, processing steps, comparison steps, and decision steps.

It is important to note that the construction and arrangement of the various embodiments is illustrative only. Additionally, any element disclosed in one embodiment may be incorporated or utilized with any other embodiment disclosed herein.

## Claims

1. A mobility scooter comprising:
a drive member;
an obstruction detection and avoidance system, the obstruction detection and avoidance system:
a thermal sensor configured to sense an obstruction,
a controller communicatively coupled to a thermal sensor, controller comprising:
a processing circuit comprising memory communicably coupled to one or more processors, the memory storing instructions that, when executed by the one or more processors, causes the processing circuit to:
detect an obstruction;
determine a distance range from the obstruction;
generate a control signal when the distance range is less than a predetermined value to adjust the output of the drive member.

2. The mobility scooter of claim 1, wherein the drive member is an electric motor.

3. The mobility scooter of claim 1, wherein the control signal includes a voltage signal element to modulate an input voltage transmitted to the electric motor via the controller.

4. The mobility scooter of claim 1, wherein the thermal sensor is an infrared sensor configured to sense infrared radiation.

5. The mobility scooter of claim 1, wherein the thermal sensor of the object detection and avoidance system is disposed on a rear portion of the mobility scooter.

6. The mobility scooter of claim 1, wherein the thermal sensor of the detection system is disposed on a front portion of the mobility scooter.

7. The mobility scooter of claim 1, wherein the controller, in outputting the control signal, is further configured to:
reduce the velocity of the mobility vehicle to a non-zero value in response to determining that an obstacle is detected within a first distance range; and
reduce the velocity of the mobility scooter to zero in response to determining that an obstacle is detected within a second distance range,
wherein the second distance range is preferably smaller in magnitude than the first distance range.

8. A detection system for use on a mobility scooter comprising:
a thermal sensor configured to sense an obstruction by capturing a thermal image; and
a processor configured to:
analyze a thermal signature contained in the thermal image to determine the presence of an obstruction;
determine whether the obstruction constitutes an obstruction to be avoided by the mobility scooter;
generate a signal indicative of the presence of the obstruction;
reduce the velocity of the mobility scooter to a non-zero value in response to determining that an obstacle is detected within a first distance range; and
reduce the velocity of the mobility scooter to zero in response to determining that an obstacle is detected within a second distance range.

9. The detection system according to claim 8, further comprising a non-transitory memory, and wherein the processor is configured to execute an artificial intelligence function to determine whether the obstruction constitutes an obstruction to be avoided by the mobility scooter.

10. The detection system according to claim 8, wherein the processor is further configured to transmit the signal indicative of the presence of the obstruction to a controller configured to adjust the velocity of the mobility vehicle.

11. The detection system according to claim 10, wherein the signal indicative of the presence of the obstruction includes distance information corresponding to the distance of the obstruction from the mobility vehicle.

12. The detection system according to claim 8, further comprising a non-thermal sensor configured to transmit non-thermal data to the processor, and wherein the processor is further configured to analyze the non-thermal data in conjunction with the thermal image captured by the thermal sensor.

13. A method of assembly comprising:
mounting a detection system on a mobility scooter, the detection system including a thermal sensor and a processor; and
connecting the detection system to a controller connected to a braking system of the mobility scooter.

14. The method of assembly according to claim 13, further comprising connecting the thermal sensor with the processor of the detection system.

15. The method of assembly according to claim 13, wherein connecting the detection system to a controller connected to a braking system includes connecting the controller to a DC motor.
